# EUROPÄISCHE PATENTSCHRIFT

(11) **EP 0 508 994 B1**
(45) Veröffentlichungstag und Bekanntmachung des Hinweises auf die Patenterteilung: **20.07.1994**
(21) Anmeldenummer: 91900726.0
(22) Anmeldetag: 20.12.1990
(51) Int. Cl.: G05B 19/19, G05D 3/18

(54) **VERFAHREN ZUR STEUERUNG EINES ÜBER EIN PROPORTIONALVENTIL VERSTELLBAREN STELLGLIEDES**
PROCESS FOR CONTROLLING AN ACTUATOR WHICH CAN BE ADJUSTED BY MEANS OF A PROPORTIONAL VALVE
PROCEDE POUR LA COMMANDE D'UN ELEMENT DE REGLAGE REGLABLE PAR L'INTERMEDIAIRE D'UNE SOUPAPE PROPORTIONNELLE

(30) Priorität: 05.01.1990 DE 4000221
(43) Veröffentlichungstag der Anmeldung: 21.10.1992
(73) Patentinhaber: SIEMENS AKTIENGESELLSCHAFT, 80333 München (DE); Mannesmann Rexroth GmbH, 97813 Lohr (DE); Bayerische Motoren Werke Aktiengesellschaft, 80788 München (DE)
(72) Erfinder: GRAUVOGL, Erwin, D-8411 Sinzing (DE); LACHER, Franz Xaver, D-8408 Barbing (DE); RAUNER, Hans, Dr., D-8415 Nittenau (DE); AUFFHAMMER, Reinhard, D-8000 München 60 (DE); HAHN, Harald, D-8773 Frammersbach (DE); PATZE, Helmut, D-8773 Frammersbach (DE)
(74) Vertreter: Fuchs, Franz-Josef, Dr.-Ing.
(86) Internationale Anmeldenummer: DE9000981
(87) Internationale Veröffentlichungsnummer: WO9110178

(56) Entgegenhaltungen:
- DE-A- 3 205 860
- GB-A- 1 042 882

## Beschreibung

Die Erfindung betrifft ein Verfahren zur Steuerung eines über ein Proportionalventil verstellbaren Stellgliedes nach dem Oberbegriff des Anspruchs 1.

Aufbau und Arbeitsweise einer solchen Steuereinrichtung ist in DE 32 05 860 beschrieben. Dort werden zwei Steuermagneten eines Proportionalventils zwar mit analogen Steuersignalen angesteuert, ein Ansteuerverfahren mit gegensinnig wirkenden Steuerimpulsen veränderbarer Amplitude oder Dauer mit bestimmter Frequenz und bestimmtem gegenseitigem Phasenwinkel ist jedoch allgemein bekannt.

Besonders in der Kleinhydraulik, wo aufgrund der Bauform solcher Steuereinrichtungen die Eigenfrequenz des Stellgliedes wesentlich größer als die des Proportionalventils ist, reagiert das Stellglied auf jede Positionsänderung des Steuerkolbens des Proportionalventils nahezu verzögerungsfrei.

Um die Haftreibung dieses Steuerkolbens möglichst gering zu halten, wird das Proportionalventil mit gegensinnig wirkenden Steuerimpulsen angesteuert in der Weise, daß die beiden Steuermagneten, wie bereits beschrieben, mit zwei Steuerimpulszügen beaufschlagt werden, die gegeneinander einen konstanten Phasenwinkel von in der Regel 180° aufweisen. Die Auslenkung des Steuerkolbens aus seiner Mittelstellung erfolgt durch gegensinnige Veränderung von Amplitude oder Dauer der Steuerimpulse.

Diese wechselseitige Ansteuerung macht sich oft als störende Vibration des Stellgliedes bemerkbar, was in vielen Anwendungsfällen zu erheblichen Geräuschproblemen führt.

Es ist deshalb Aufgabe der Erfindung, ein Verfahren für ein Stellglied der genannten Art anzugeben, bei welchem keine derartigen Geräuschprobleme auftreten.

Diese Aufgabe wird erfindungsgemäß durch die im Kennzeichen des Anspruchs 1 genannten Merkmale gelöst.

Versuche haben ergeben, daß sich eine Vibration des Stellgliedes und damit verbundene störende Geräusche erst ab einem bestimmten Mindestwert der Verstellgeschwindigkeit des Stellgliedes bemerkbar macht. Es wurde auch ermittelt, daß ab einer bestimmten Verstellgeschwindigkeit des Stellgliedes die wechselseitige Ansteuerung des Proportionalventils ohne Verschlechterung der Steuerung reduziert werden kann. Diese Verstellgeschwindigkeit kann auf einfache Weise aus einer Steuergröße der Steuerung, beispielsweise der Führungsgröße oder der Stellgröße, oder von einer einer Steuergröße zugeordneten Größe, beispielsweise der Differenz der Amplituden bzw. Dauern der Steuerimpulse, abgeleitet werden.

Es hat sich als besonders zweckmäßig erwiesen, die Steuermagneten des Proportionalventils bei Stillstand oder geringen Verstellgeschwindigkeiten des Stellgliedes zwar wie bisher mit um 180° gegeneinander versetzten Steuerimpulszügen anzusteuern, ab einem bestimmten Grenzwert der Verstellgeschwindigkeit bzw. Steuergröße jedoch den Phasenwinkel mit ansteigender Steuergröße entsprechend einer gespeicherten Kennlinie oder Tabelle zu verringern.

Die Erfindung wird nachstehend anhand der Zeichnung näher erläutert. Es zeigen:
- Figur 1: ein Diagramm der Steuerimpulse und
- Figur 2: den Verlauf des Phasenwinkels zwischen Steuerimpulsen in Abhängigkeit von einer Steuergröße.

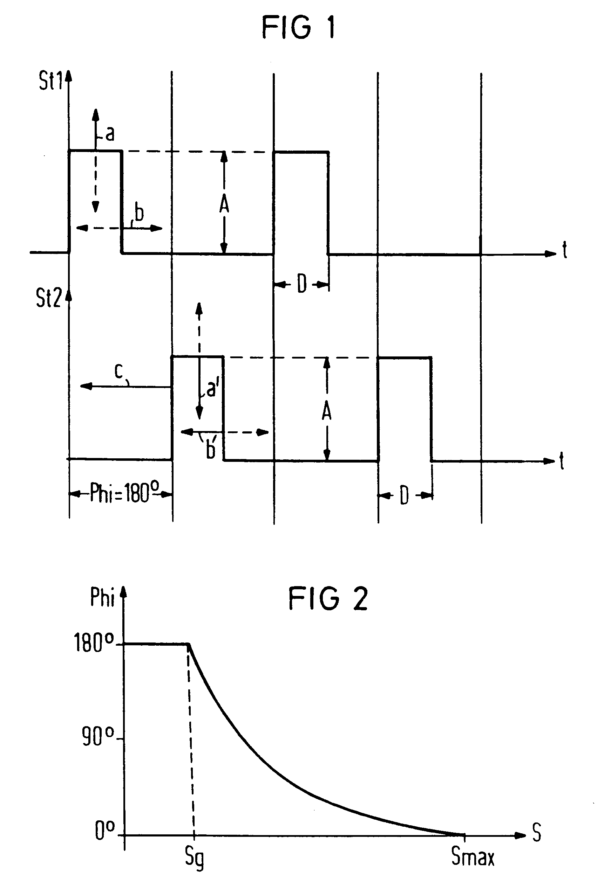

Figur 1 zeigt in einem Diagramm die zeitlichen Verläufe zweier den Steuermagneten eines Proportionalventils zugeführten Steuerimpulszüge St1 und St2. Bei dieser Dimensionierung der Steuerimpulse steht der Steuerkolben des Proportionalventils in seiner Mittelstellung und das von ihm angesteuerte Stellglied verharrt bewegungslos in seiner eingestellten Position. Der Phasenwinkel zwischen den beiden Steuerimpulszügen St1 und St2 beträgt 180°. Beide Impulszüge sind mit Ausnahme der Phasenverschiebung identisch, d. h. sie haben gleiche Frequenzen, gleiche Amplituden A und gleiche Impulsdauern D. In diesem Zustand hat die Führungsgröße der Steuerung den Wert "Null".

Soll nun das Stellglied in die eine Richtung bewegt werden, so nimmt die Führungsgröße beispielsweise einen positiven Wert an. Erfolgt die Steuerung über die Amplituden der Steuerimpulse, so wird beispielsweise die Amplitude der Steuerimpulse St1 entsprechend dem Pfeil a vergrößert und die Amplitude der Steuerimpulse St2 entsprechend dem Pfeil a' verkleinert. Aufgrund dieser ungleichen Steuerimpulse bewegt sich das Stellglied in die gewünschte Richtung. Je größer der Betrag der Führungsgröße ist, umso mehr wird dabei der Phasenwinkel Phi zwischen den beiden Steuerimpulsen entsprechend dem Pfeil c verringert.

Erfolgt die Steuerung des Stellgliedes über die Impulsdauern D der Steuerimpulse, so wird die Impulsdauer der Steuerimpulse St1 entsprechend dem Pfeil b verlängert und im gleichen Zuge die Impulsdauer der Steuerimpulse St2 entsprechend dem Pfeil b' verkürzt. Die Steuerung des Phasenwinkels Phi erfolgt dabei wie bei der Amplitudenregelung.

Soll das Stellglied in die andere Richtung bewegt werden, so werden die Amplituden oder Impulsdauern der Steuerimpulse in (gestrichelt dargestellte) Gegenrichtung der Pfeile a, a' oder b, b' verändert. Die Veränderung des Phasenwinkels erfolgt jedoch wieder in Pfeilrichtung c in gleicher Weise wie vorher beschrieben.

Der bevorzugte Verlauf des Phasenwinkels Phi in Abhängigkeit von der gewählten Steuergröße S, in diesem Fall von der Führungsgröße der Steuerung, ist in Figur 2 dargestellt. Es ist dabei zu erkennen, daß der Phasenwinkel Phi 180° beträgt, solange die Steuergröße S unterhalb eines vorgegebenen Grenzwertes Sg liegt und mit steigender Steuergröße, in diesem Fall also der Führungsgröße, entsprechend der in Figur 2 vorgegebenen Kennlinie bis zum Wert 0° abfällt, bevor oder sobald der Maximalwert Smax der Steuergröße erreicht wird. Bei kleiner werdender Steuergröße S wird die dargestellte Kennlinie in umgekehrter Richtung durchlaufen, bis der Phasenwinkel wieder den Wert 180° einnimmt, wenn das Stellglied seine neue Position erreicht oder nahezu erreicht hat.

Bei einem Betrieb der Steuereinrichtung gemäß dem vorstehend beschriebenen Verfahren werden störende Vibrationen des Stellgliedes und dadurch verursachte Störgeräusche vermieden.

## Patentansprüche

1. Verfahren zur Steuerung eines über ein Proportionalventil verstellbaren Stellgliedes, wobei das Proportionalventil über zwei Steuermagneten mit gegensinnig wirkenden Steuerimpulsen (St1, St2) veränderbarer Amplitude (A) oder Impulsdauer (D) mit bestimmter Frequenz und bestimmtem gegenseitigem Phasenwinkel (Phi) steuerbar ist,
**dadurch gekennzeichnet**,
daß der Phasenwinkel (Phi) abhängig von wenigstens einer Steuergröße (S) oder von einer einer Steuergröße zugeordneten Größe (A, D) veränderbar ist.

2. Verfahren nach Anspruch 1,
**dadurch gekennzeichnet**, daß eine Steuergröße (S) die Führungsgröße der Steuerung ist.

3. Verfahren nach Anspruch 1,
**dadurch gekennzeichnet**, daß eine Steuergröße (S) die Stellgröße der Steuerung ist.

4. Verfahren nach Anspruch 1,
**dadurch gekennzeichnet**, daß eine einer Steuergröße (S) zugeordnete Größe die der Führungsgröße zugeordnete Differenz der Amplituden (A) und/oder Impulsdauern (D) der Steuerimpulse (St1, St2) ist.

5. Verfahren nach Anspruch 1,
**dadurch gekennzeichnet**, daß der Phasenwinkel (Phi) mit größer werdender Steuergröße (S) verringert wird.

6. Verfahren nach Anspruch 1,
**dadurch gekennzeichnet**, daß die Beziehung zwischen Phasenwinkel (Phi) und Steuergröße (S) aus einer gespeicherten Kennlinie oder Tabelle abrufbar ist.

7. Verfahren nach Anspruch 1,
**dadurch gekennzeichnet**, daß der Phasenwinkel (Phi) veränderbar ist, wenn die Steuergröße (S) oder die einer Steuergröße zugeordnete Größe einen vorgegebenen Grenzwert (Sg) übersteigt.

8. Verfahren nach Anspruch 7,
**dadurch gekennzeichnet**, daß der Phasenwinkel (Phi) konstant ist, wenn die Steuergröße (S) oder die einer Steuergröße zugeordnete Größe unterhalb des Grenzwertes (Sg) liegt.

9. Verfahren nach Anspruch 8,
**dadurch gekennzeichnet**, daß der konstante Phasenwinkel (Phi) 180 Grad beträgt.

## Claims

1. Process for controlling an actuator which can be adjusted by means of a proportional valve, the proportional valve being controllable by means of two control magnets with control pulses (St1, St2) acting in opposite directions and having variable amplitude (A) or pulse duration (D) and having a specific frequency and specific mutual phase angle (Phi), characterized in that the phase angle (Phi) can be varied as a function of at least one control variable (S) or of a variable (A, D) associated with a control variable.

2. Process according to Claim 1, characterized in that a control variable (S) is the command variable of the control.

3. Process according to Claim 1, characterized in that a control variable (S) is the correction variable of the control.

4. Process according to Claim 1, characterized in that a variable associated with a control variable (S) is the difference of the amplitudes (A) and/or pulse durations (D), associated with the command variable, of the control pulses (St1, St2).

5. Process according to Claim 1, characterized in that the phase angle (Phi) is reduced as the control variable (S) increases.

6. Process according to Claim 1, characterized in that the relation between phase angle (Phi) and control variable (S) can be called up from a stored characteristic curve or table.

7. Process according to Claim 1, characterized in that the phase angle (Phi) can be varied if the control variable (S) or the variable associated with a control variable exceeds a predetermined limit value (Sg).

8. Process according to Claim 7, characterized in that the phase angle (Phi) is constant if the control variable (S) or the variable associated with a control variable lies below the limit value (Sg).

9. Process according to Claim 8, characterized in that the constant phase angle (Phi) is 180°.

## Revendications

1. Procédé de commande d'un élément de réglage réglable par l'intermédiaire d'une valve proportionnelle, la valve proportionnelle pouvant être commandée par l'intermédiaire de deux électro-aimants de commande au moyen d'impulsions (St1, St2) de commande agissant en sens inverse, d'amplitude (A) réglable ou de durée (D) d'impulsion réglable, d'une fréquence déterminée et ayant l'une par rapport à l'autre un décalage (Phi) angulaire de phase déterminé,
caractérisé en ce que,
la décalage (Phi) angulaire de phase peut être réglé en fonction d'au moins une grandeur (S) de commande ou d'une grandeur (A, D) associée à une grandeur de commande.

2. Procédé selon la revendication 1,
caractérisé en ce qu'une grandeur (S) de commande est la grandeur de référence de la commande.

3. Procédé selon la revendication 1,
caractérisé en ce qu'une grandeur (S) de commande est la grandeur réglante de la commande.

4. Procédé selon la revendication 1,
caractérisé en ce qu'une grandeur associée à une grandeur (S) de commande est la différence associée à la grandeur de référence entre les amplitudes (A) et/ou entre les durées (D) des impulsions (St1, St2) de commande.

5. Procédé selon la revendication 1,
caractérisé en ce que le décalage angulaire (Phi) de phase est réduit en fonction de l'augmentation de la grandeur (S) de commande.

6. Procédé selon la revendication 1,
caractérisé en ce que la relation entre le décalage (Phi) angulaire de phase et la grandeur (S) de commande peut être extraite d'une courbe caractéristique mémorisée, ou d'un tableau mémorisé.

7. Procédé selon la revendication 1,
caractérisé en ce que le décalage (Phi) angulaire de phase peut être réglé lorsque la grandeur (S) de commande , ou la grandeur associée à une grandeur de commande, dépasse une valeur (Sg) limite définie à l'avance.

8. Procédé selon la revendication 7,
caractérisé en ce que le décalage (Phi) angulaire de phase est constant, lorsque la grandeur (S) de commande ou la grandeur associée à une grandeur (S) de commande est inférieure à la valeur (Sg) limite.

9. Procédé selon la revendication 8,
caractérisé en ce que le décalage (Phi) angulaire de phase constant est de 180 degrés.
